Europäisches Patentamt

European Patent Office

Office européen des brevets

(19)

(11) EP 1 148 395 A2

(12) EUROPÄISCHE PATENTANMELDUNG

(43) Veröffentlichungstag:
24.10.2001 Patentblatt 2001/43

(51) Int Cl.⁷: G05B 13/04

(21) Anmeldenummer: 01105855.9

(22) Anmeldetag: 09.03.2001

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 08.04.2000 DE 10017600

(71) Anmelder: Bodenseewerk Gerätetechnik GmbH
88662 Überlingen (DE)

(72) Erfinder: Krogmann, Uwe, Dr.
88662 Überlingen (DE)

(74) Vertreter: Weisse, Jürgen, Dipl.-Phys. et al
Patentanwälte,
Dipl.-Phys. Jürgen Weisse,
Dipl.-Phys. Dr. Ing. Renate Weisse,
Bökenbusch 41
42555 Velbert (DE)

(54) Regler, insbesondere Lenkregler für Flugkörper

(57) Die Erfindung betrifft einen Regler, auf welchen ein die Zustände einer Regelstrecke (10) wiedergebender Zustandsvektor ($\underline{x}$) aufgeschaltet ist und der einen Stellgrößenvektor ($\underline{u}$) von optimierten Stellgrößen liefert, wobei der Zusammenhang zwischen Zustandsvektor und Stellgrößenvektor durch eine Matrix von Gewichten gegeben ist, welche von einer Lösung der zu-standsabhängigen Riccatigleichung abhängen. Erfindungsgemäß sind gleichungslösende Mittel (20) zur Lösung der zustandsabhängigen Riccatigleichung in Echtzeit vorgesehen und Mittel (22) zur Aufschaltung des Zustandsvektors auf diese gleichungslösenden Mittel (20), wobei die Lösung P($\underline{x}$) der zustandsabhängigen Riccatigleichung auf den Regler (12) zur Bestimmung der Gewichte aufgeschaltet ist.

FIG.1

EP 1 148 395 A2

**Beschreibung**

Die Erfindung betrifft einen Regler, auf welchen ein die Zustände einer Regelstrecke wiedergebender Zustandsvektor ($\underline{x}$) aufgeschaltet ist und der einen Stellgrößenvektor ($\underline{u}$) von optimierten Stellgrößen liefert, wobei der Zusammenhang zwischen Zustandsvektor und Stellgrößenvektor durch eine Matrix von Gewichten gegeben ist, welche von einer algorithmischen Lösung einer Optimierungsgleichung abhängen.

Bei heute gebräuchlichen Reglern werden alle gemessenen Zustände einer Regelstrecke gewichtet auf alle Stellgrößen aufgeschaltet. Die Zustände der Regelstrecke sind dabei zu einem Zustandsvektor $\underline{x}$ zusammengefaßt. Die Stellgrößen sind zu einem Stellgrößenvektor $\underline{u}$ zusammengefaßt. Die Gewichte bilden eine Matrix. Um ein optimales Regelverhalten zu erreichen, müssen diese Gewichte geeignet gewählt werden. Der Regler wird optimiert. Die Gewichte hängen ab von der Lösung einer Optimierungsgleichung wie der "zustandsabhängigen Riccatigleichung" (SDRE). Diese Lösung bildet eine von dem Zustandsvektor abhängige Matrix P($\underline{x}$).

Nach dem Stand der Technik wird die Optimierungsgleichung, z.B. die zustandsabhängige Riccatigleichung off-line berechnet. Aus der Lösung P($\underline{x}$) für den Zeitabhängigen Zustandsvektor $\underline{x}$(t) wird ein Vektor optimaler Stellgrößen $\underline{u}$($\underline{x}$) bestimmt. Da $\underline{x}$ zeitabhängig ist, ergibt sich auch ein zeitabhängiger Stellgrößenvektor. In einem Lernprozess wird dann ein neuronales Netz trainiert, auf welches bei dem Lernprozess verschiedene Zustandsvektoren $\underline{x}$ aufgeschaltet sind. Das neuronale Netz liefert dann zugehörige Stellgrößenvektoren. Diese vom neuronalen Netz gelieferten Stellgrößenvektoren $\underline{u}$(t) werden mit optimierten Stellgrößenvektoren $\underline{u}_{opt}$(t) verglichen, die sich aus der Off-Line-Lösung z.B. der zustandsabhängigen Riccatigleichung ergeben. Die Differenz bildet das Lernsignal zum Trainieren des neuronalen Netzes. Dieses so trainierte neuronale Netz bildet dann den off-line programmierten Regler, z.B. einen Lenkregler für Flugkörper, der zu zeitabhängigen Zustandsvektoren x(t) entsprechende zeitabhängige, optimale Stellgrößenvektoren $\underline{u}$(t) liefern.

Das Trainieren eines neuronalen Netzes ist aufwendig und erfordert die Verarbeitung sehr großer Datenmengen. Ein so erhaltener Regler ist inflexibel.

Der Erfindung liegt die Aufgabe zu Grunde, einen Regler der eingangs genannten Art zu verbessern.

Erfindungsgemäß wird diese Aufgabe gelöst durch gleichungslösende Mittel zur algorithmische Lösung der Optimierungsgleichung in Echtzeit und Mittel zur Aufschaltung des Zustandsvektors auf diese gleichungslösenden Mittel, wobei die Lösung P($\underline{x}$) der Optimierungsgleichung auf den Regler zur Bestimmung der Gewichte aufgeschaltet ist.

Es hat sich gezeigt, daß die Optimierungsgleichung, z.B. die zustandsabhängige Riccatigleichung jedenfalls praktisch in Echtzeit gelöst werden kann. Es ergibt sich dann zu jedem Zustandsvektor $\underline{x}$(t) eine Lösung P($\underline{x}$). Diese Lösung P($\underline{x}$) wird auf einen Regler aufgeschaltet und bestimmt in diesem die Gewichte für die Zustandsgrößen des auch auf den Regler aufgeschalteten Zustandsvektors $\underline{x}$(t). Daraus bildet der Regler dann die optimalen Stellgrößen des optimalen Stellgrößenvektors $\underline{u}_{opt}$(t). Bei dem erfindungsgemäßen Aufbau des Reglers sind die zu verarbeitenden Datenmengen geringer, dafür ist eine hohe Rechenleistung erforderlich.

Die Lösung der Optimierungsgleichung setzt ein Modell der Regelstrecke voraus. Dieses Modell der Regelstrecke kann beschrieben werden durch eine Gleichung

$$\underline{\dot{x}} = \underline{g}\,(\underline{x},\underline{u},t)\,.$$

Zur analytischen Lösung z.B. der zustandsabhängigen Riccatigleichung wird diese Funktion "faktorisiert", d.h. durch eine Form

$$\underline{\dot{x}} = F(\underline{x})\underline{x} + G(\underline{x})\underline{u}$$

ersetzt, wobei F und G vom Zustandsvektor $\underline{x}$ abhängige Matrizen sind. Das läßt nur ein vereinfachtes Modell der Regelstrecke zu. Dieses Modell kann u.U. erheblich von der Realität abweichen. Die reale Regelstrecke enthält fast immer Parameterunsicherheiten und/oder Nichtlinearitäten, die in dieser Form nicht modelliert werden können oder ggf. gar nicht bekannt sind.

Diese Probleme werden in weiterer Ausbildung der Erfindung dadurch gelöst, daß

(a) ein lernfähiges Modell der Regelstrecke vorgesehen ist, welches von dem Zustandsvektor und dem Stellgrößenvektor beaufschlagt ist und einen Schätzwert des Zustandsvektors liefert,

(b) ein erstes vektorielles Lernsignal für das lernfähige Modell von der Differenz des tatsächlichen Zustandsvektors und des Schätzwertes des Zustandsvektors gebildet ist und

(c) aus dem trainierten Modell der Regelstrecke ein zweites vektorielles Lernsignal für ein vom Zustandsvektor und dem Stellgrößenvektor beaufschlagtes reglerseitiges lernfähiges Netzwerk abgeleitet ist, wobei dieses reglerseitige Netzwerk einen Korrekturwert für den sich aus der Lösung der Optimierungsgleichung an dem Regler ergebenden optimalen Stellgrößenvektor zur Bildung des auf die Regelstrecke aufgeschalteten aktuellen Stellgrößenvektors liefert.

Dabei wird durch einen ersten Lernvorgang während des Arbeitens des Reglers das Modell der Strecke korrigiert. Anhand des so korrigierten Streckenmodells erfolgt dann in einem zweiten Lernvorgang eine Korrektur des Reglers.

Das geschieht vorteilhafterweise in der Form, daß

(a) das Modell der Regelstrecke eine erste Matrix (F($\underline{x}$)) aufweist, welche mit dem Zustandsvektor ($\underline{x}$) multipliziert wird, und eine zweite Matrix (G($\underline{x}$)), welche mit dem Stellgrößenvektor multipliziert wird,

(b) die Summe der mit den jeweiligen Matrizen multiplizierten Zustands- und Stellgrößenvektoren als Modellwert der Zeitableitung des Zustandsvektors zur Bildung eines Modellwertes des Zustandsvektors integriert wird und

(c) eine regelstreckenseitige lemfähige Struktur vorgesehen ist, die einen Korrekturwert für den Modellwert des Zustandsvektors liefert, wobei diese lernfähige Struktur von dem ersten vektoriellen Lernsignal trainierbar ist.

Dabei kann das zweite vektorielle Lernsignal durch Rückpropagation durch die regelstreckenseitige lernfähige Struktur erzeugt werden.

Eine andere Lösung besteht darin, daß

(a) eine off-line trainierte lernfähige Struktur an ihrem Eingang mit dem Zustandsvektor ($\underline{x}$) der Regelstrecke beaufschlagt ist und an ihrem Ausgang einen Stellgrößenvektor ($\underline{u}$) liefert, wobei die Stellgrößen des Stellgrößenvektors auf die Regelstrecke aufgeschaltet sind,

(b) die gleichungslösenden Mittel on-line von dem Zustandsvektor ($\underline{x}$) beaufschlagt sind und einen optimalen Stellgrößenvektor ($\underline{u}_{opt}(t)$) liefern und

(c) die Differenz des von der lernfähige Struktur gelieferten Stellgrößenvektors ($\underline{u}(t)$) und des von den gleichungslösenden Mitteln gelieferten, optimalen Stellgrößenvektors ($\underline{u}_{opt}(t)$) als Lernsignal on-line auf die lernfähige Struktur aufgeschaltet ist.

Der Regler enthält eine lernfähige Struktur, z. B. ein neuronales Netz, das off-line als optimaler Regler trainiert ist. Diese lernfähige Struktur liefert eine stabile, allerdings ggf. für einige Bereiche des Zustandsraumes nicht optimale Regelung. Ergänzend hierzu erfolgt eine Lösung der Optimierungsgleichung wie der zustandsabhängigen Riccatigleichung in Echtzeit. Der damit für den jeweiligen zeitabhängigen Zustandsvektor erhaltene optimale Stellgrößenvektor dient durch Vergleich mit dem von der lernfähigen Struktur gelieferten Stellgrößenvektor zum "on-line" Weitertrainieren der lernfähige Struktur.

Statt durch die zustandsabhängige Riccatiglei-chung können die Gewichtfaktoren zur Bestimmung des optimalen Stellgrößenvektors auch durch andere Optimierungsgleichungen ermittelt werden. Der Regler kann z.B. ein LQ-Regler sein. Das geschilderte Verfahren der Korrektur eines Reglermodells mittels einer lernfähigen Struktur, z.B. eines neuronalen Netzes, und der Korrektur des optimalen Stellgrößenvektors vom Lenkregler mittels einer durch das korrigierte Reglermodell trainierten zweiten lernfähigen Struktur kann auch ggf. bei einem -ggf. vorhandenen- mit Proportionalnavigation oder erweiterter Proportionalnavigation arbeitenden Regler angewandt werden, um das Regelverhalten zu verbessern.

Die lernfähige Struktur kann ein neuronales Netz aber auch ein fuzzy-neuronales Netz oder eine adaptive Fuzzy-Logik-Einheit sein. Die lernfähige Struktur kann auch off-line mit Vorwissen über das dynamische Verhalten der Regelstrecke in einer Simulation trainiert sein.

Ausführungsbeispiele der Erfindung sind nachstehend unter Bezugnahme auf die zugehörigen Zeichnungen näher erläutert.

Fig. 1    zeigt ein Blockdiagramm eines Reglers mit "on-line"-Lösung der zustandsabhängigen Riccatigleichung.

Fig.2    zeigt ein Blockdiagramm eines Reglers, bei welchem durch Lernvorgänge "on-line" eine Korrektur des Modells der Regelstrecke und eine Korrektur des Reglers erfolgt.

Fig.3    zeigt eine Anordnung, bei welcher ein als Regler fungierendes, trainiertes, neuronales Netz durch eine in Echtzeit erhaltene Lösung der zustandsabhängigen Riccatigleichung on-line weiter trainiert wird.

Fig.4    zeigt eine Anordnung, bei welcher im wesentlichen in Echtzeit eine Lösung der zustandsabhängigen Riccatigleichung mittels eines diese Gleichung abbildenden neuronalen Netzes gefunden wird.

Fig.5    zeigt eine andere Anordnung, bei welcher im wesentlichen in Echtzeit eine Lösung des zustandsabhängigen Riccatigleichung mittels eines in einem Regelkreis angeordneten Prozessors (Systolic Array Processor) gefunden wird.

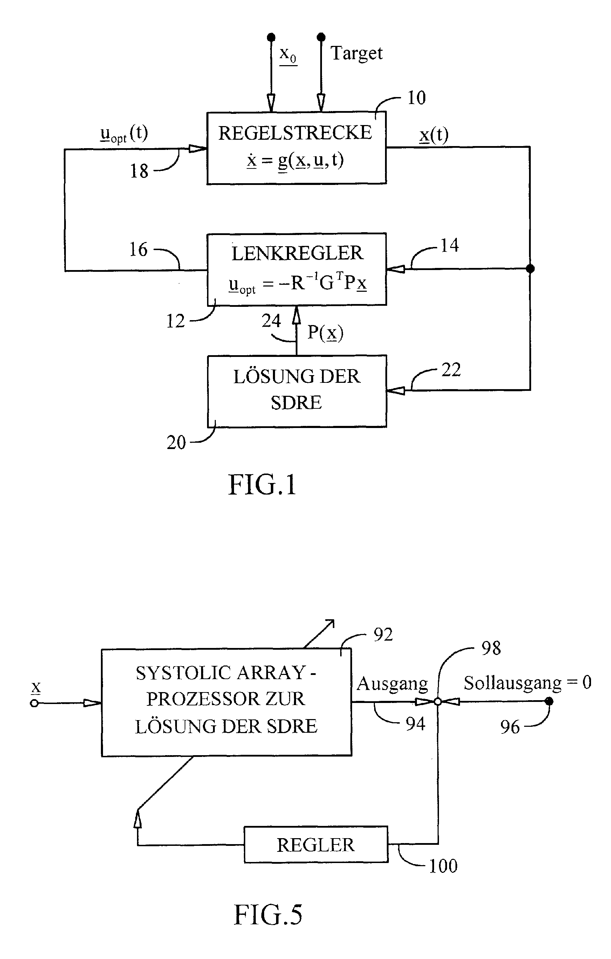

In Fig.1 ist mit 10 eine Regelstrecke bezeichnet. Die Regelstrecke kann von einem Flugkörper gebildet sein, der ein Ziel verfolgt, wobei die Bahn des Flugkörpers zu dem Ziel geregelt werden soll. Die Regelstrecke kann durch eine Gleichung $\dot{\underline{x}} = \underline{g}\,(\underline{x},\underline{u},t)$ beschrieben werden, wobei $\underline{x}$ ein Zustandsvektor ist, also ein Vektor der Zustandsgrößen der Regelstrecke, $\underline{u}$ ein

Stellgrößenvektor, also ein Vektor der verfügbaren Stellgrößen, t die Zeit und g eine Funktion. Die Regelstrecke 10 ist beeinflußt von Störgrößen, die zu einem Vektor $\underline{x}_0$ zusammengesetzt sind und -bei einem Lenkregler für Flugkörper- von den Bewegungen eines Ziels, zu welchem der Flugkörper geführt werden soll. Die Regelstrecke 10 wird geregelt mittels eines Reglers 12. Der Regler ist beaufschlagt von dem Zustandsvektor $\underline{x}(t)$ der Regelstrecke 10. Das sind die Eingangsgrößen des Reglers 12 an einem Eingang 14. Der Regler 12, beispielsweise ein Lenkregler für einen Flugkörper, liefert Stellgrößen, die zu einem Stellgrößenvektor $\underline{u}$ zusammengefaßt sind. Der Stellgrößenvektor $\underline{u}(t)$ ist mit dem Zustandsvektor $\underline{x}(t)$ über eine Matrix verknüpft, d.h. jede Stellgröße des Stellgrößenvektors $\underline{u}$ hängt mit jeder Zustandsgröße des Zustandsvektors $\underline{x}$ über einen Gewichtsfaktor, ein Element der Matrix, zusammen. Die Stellgrößen des Stellgrößenvektors $\underline{u}$ sind von einem Ausgang 16 des Reglers auf die Regelstrecke 10 aufgeschaltet, wie in Fig.1 durch den "Eingang" 18 symbolisiert ist. Die Gewichtsfaktoren der Matrix des Reglers sollen nun so gewählt sein, daß sich ein optimales Regelverhalten ergibt. Das ist in Fig.1 durch die Bezeichnung $\underline{u}_{opt}(t)$ angedeutet.

Diese Optimierung der Gewichtsfaktoren erfolgt bei der Ausführung nach Fig.1 "on-line" durch Lösung der zustandsabhängigen Riccatigleichung SDRE ("State Dependent Riccati Equation"). Die gleichungslösenden Mittel 20 zur "on-line"-Lösung der zustandsabhängigen Riccatigleichung sind in Fig.1 durch einen Block dargestellt. Auf einen Eingang 22 der gleichungslösenden Mittel 20 ist der zeitabhängige Zustandsvektor $\underline{x}(t)$ aufgeschaltet. Die gleichungslösenden Mittel 20 liefern als Lösung eine Matrix $P(\underline{x})$. Diese Matrix $P(\underline{x})$ ist, wie durch Pfeil 24 dargestellt ist, auf den Regler 12 aufgeschaltet. Der Regler bildet dann die optimale Gewichtsmatrix $-R^{-1}G^T P$.

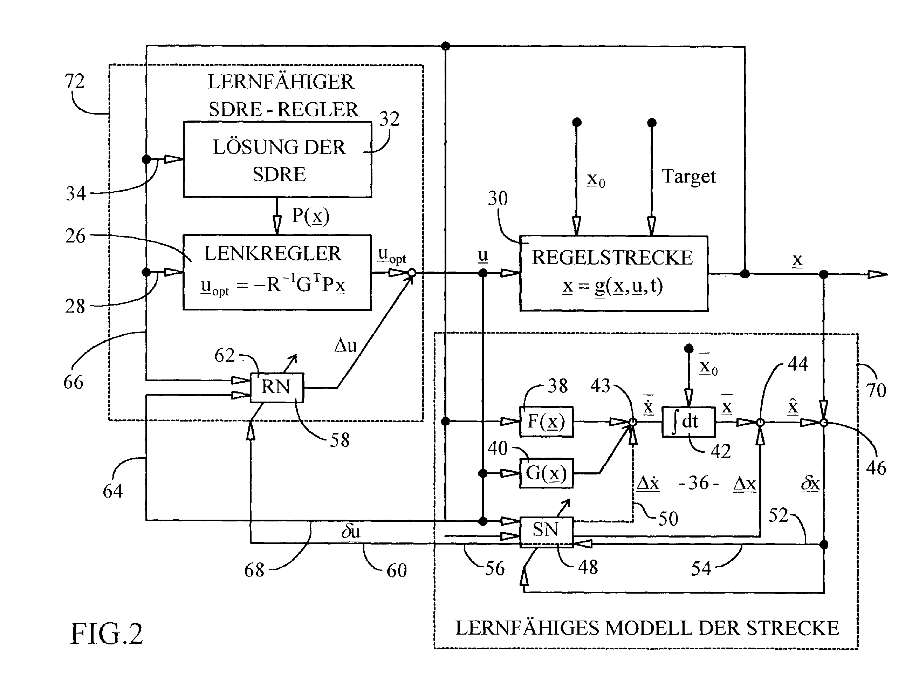

Die Lösung der zustandsabhängigen Riccatigleichung geht von der oben angegebenen Faktorisierung $\dot{\underline{x}} = F(\underline{x})\,\underline{x} + G(\underline{x})\,\underline{u}$ aus. Diese kann u.U. die Regelstrecke nicht ausreichend modellieren. Bei der Ausführung nach Fig.2 werden lernfähige Strukturen verwendet, um die Modellierung der Regelstrecke zu korrigieren und danach eine Korrektur des Reglers vorzunehmen.

In Fig.2 ist mit 26 ein Regler ähnlich Regler 10 von Fig.1 bezeichnet. Auf den Regler 26 ist über einen Eingang 28 der Zustandsvektor $\underline{x}$ einer Regelstrecke 30 aufgeschaltet. Gleichungslösende Mittel 32, die ebenfalls an einem Eingang 34 den Zustandsvektor $\underline{x}$ erhalten, liefern eine Lösung $P(\underline{x})$ der zustandsabhängigen Riccatigleichung. Diese Lösung $P(\underline{x})$ ist auf den Regler 26 aufgeschaltet. Dadurch werden die Gewichte der Gewichtsmatrix des Reglers 26 optimiert. Der Regler 26 liefert einen Stellgrößenvektor $\underline{u}_{opt}$.

Das entspricht im wesentlichen der Anordnung von Fig.1. Es kann sich auch hier um einen Lenkregler handeln, der einen Flugregler zu einem Ziel führt, wobei diese Führung die Regelstrecke bildet.

Zu der Regelstrecke 30 ist ein Modell 36 der Regelstrecke vorgesehen, wie es der Lösung der zustandsabhängigen Riccatigleichung zu Grunde liegt. Der Zustandsvektor $\underline{x}$ wird mit der Funktion $F(\underline{x})$ multipliziert, die durch einen Block 38 dargestellt ist. Der Stellgrößenvektor $u$ wird mit einer Funktion $G(\underline{x})$ multipliziert, die durch einen Block 40 dargestellt ist. Die Produkte werden in einem Summierpunkt 42 summiert. Das ergibt die Zeitableitung $\dot{\bar{x}}$ eines Modell-Zustandsvektors. Durch Integration dieser Zeitableitung $\dot{\bar{x}}$ ergibt sich der Modell-Zustandsvektor $\bar{x}$ selbst. Die Integration ist durch einen Block 42 angedeutet, wobei in diesen Block noch der Ausgangswert $\bar{x}_0$ eingegeben wird.

Der so aus dem Modell erhaltene Zustandsvektor $\bar{x}$ wird in einem Summierpunkt 44 korrigiert um einen vektoriellen Korrekturwert $\underline{\Delta x}$ korrigiert. Das ergibt einen Schätzwert $\hat{x}$ für den Zustandsvektor. In einem Summierpunkt 46 wird die Differenz $\delta\underline{x}$ des tatsächlich gemessenen Zustandsvektors $\underline{x}$ und des Schätzwertes $\hat{x}$ gebildet. Diese Differenz $\delta\underline{x}$ ist als Lernsignal auf ein regelstreckenseitiges, neuronales Netz 48 geschaltet. Das regelstreckenseitige neuronale Netz liefert den vektoriellen Korrekturwert $\underline{\Delta x}$, der auf den Summierpunkt 44 aufgeschaltet ist. Fakultativ kann das neuronale Netz auch noch einen vektoriellen Korrekturwert $\underline{\Delta\dot{x}}$ auf den Summierpunkt 42 aufschalten, wie durch die gestrichelte Verbindung 50 dargestellt ist. Auf diese Weise wird das der Lösung der zustandsabhängigen Riccatigleichung zu Grunde liegende Modell 36 an die reale Regelstrecke angepaßt.

Dieses angepaßte Modell gestattet nun auch eine entsprechende Anpassung des Reglers 26. Zu diesem Zweck wird die Differenz $\delta\underline{x}$ nicht nur als Lernsignal auf das regelstreckenseitige neuronale Netz geschaltet sondern auch, wie durch Verbindung 52 dargestellt ist, durch dieses regelstreckenseitige neuronale Netz 48 rückpropagiert. Das in der beschriebenen Weise trainierte neuronale Netz 48 erhält an einem Eingang 54 die Differenz $\delta\underline{x}$ und liefert an einem Ausgang 56 einen Vektor $\delta\underline{u}$. Dieser Vektor $\delta\underline{u}$ dient als Lernsignal für ein reglerseitiges, neuronales Netz 58. Das ist durch die Verbindung 60 dargestellt. Das reglerseitige neuronale Netz 58 erhält an einem Eingang 62 den realen Zustandsvektor $\underline{x}$ und an einem Eingang 64 den Stellgrößenvektor $\underline{u}$, wie durch die Verbindungen 66 bzw. 68 dargestellt ist.

Das lernfähige Modell der Regelstrecke ist mit 70 bezeichnet. Der lernfähige Regler ist mit 72 bezeichnet. Die Lernvorgänge laufen on-line ab.

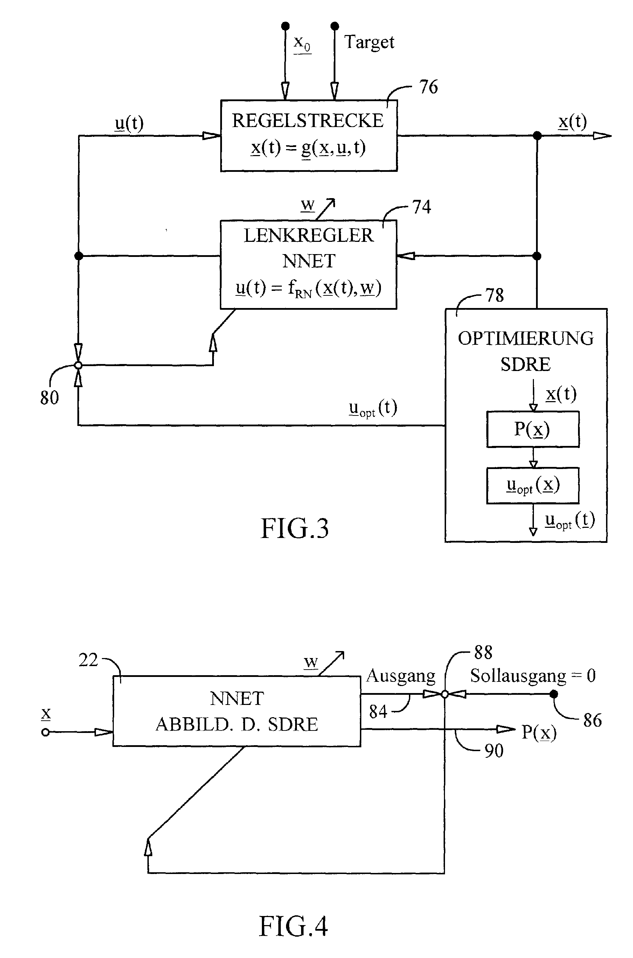

In Fig.3 enthält der Regler ein neuronales Netz 74. Das neuronale Netz 74 ist "off-line" trainiert. Das neuronale Netz 74 erhält von einer Regelstrecke 76 einen Zustandsvektor $\underline{x}(t)$, der die Zustände der Regelstrecke 76 zusammenfaßt. Das trainierte neuronale Netz liefert einen Stellgrößenvektor $\underline{u}(t)$, der die auf die Regelstrecke wirkenden Stellgrößen zusammenfaßt. Auch hier kann die Regelstrecke den Prozess der Verfolgung eines Ziels durch einen Flugkörper sein. Das ist übliche Technik.

Bei der Ausführung nach Fig.3 sind zusätzlich gleichungslösende Mittel 78 zur Lösung der zustandsabhängigen Riccatigleichung vorgesehen. Diese gleichungslösenden Mittel 78 erhalten ständig den zeitabhängigen Zustandsvektor $\underline{x}(t)$ der Regelstrecke 76. Die von den gleichungslösenden Mitteln gelieferte Lösung $P(\underline{x})$ gestattet die Bildung eines vom Zustandsvektor $\underline{x}$ abhängigen, optimalen Stellgrößenvektors $\underline{u}_{opt}(\underline{x})$ und damit, da dieser Zustandsvektor $\underline{x}$ zeitabhängig ist, eines zeitabhängigen, optimalen Stellgrößenvektors $\underline{u}_{opt}$ (t). Dieser optimale Stellgrößenvektor $\underline{u}_{opt}(t)$ wird in einem Summierpunkt 80 mit dem realen, von dem neuronalen Netz 74 gelieferten Stellgrößenvektor $\underline{u}(t)$ verglichen. Die Differenz bildet ein Lernsignal für das neuronale Netz, durch welches das neuronale Netz 74 on-line "nachtrainiert" wird.

Auf diese Weise kann das neuronale Netz 74 in Echtzeit in zusätzlichen Punkten des Zustandsraumes trainiert werden.

In Fig.4 ist eine Möglichkeit zur Lösung der zustandsabhängigen Riccatigleichung in Echtzeit dargestellt.

In Fig.4 ist mit 82 ein neuronales Netz bezeichnet. Dieses neuronale Netz 82 stellt ein Abbild der zustandsabhängigen Riccatigleichung dar. Die Prozessorelemente des neuronalen Netzes 82 führen die Operation eines Skalarproduktes aus. Die zustandsabhängige Riccatigleichung kann mit Skalarprodukten dargestellt werden. Der Ausgang 84 des neuronalen Netzes 82 sollte null sein. Daher ist bei 86 ein Sollausgang "0" vorgegeben. Der Sollausgang "0" wird in einem Summierpunkt 88 mit dem tatsächlichen Ausgang 84 verglichen. Die Differenz stellt ein Lernsignal dar, mittels dessen das neuronale Netz 82 trainiert wird, wie in Fig.4 angedeutet ist. Durch dieses Training werden die Gewichtsfaktoren des neuronalen Netzes so eingestellt, daß am Ausgang "0" erscheint. Der Zusammenhang zwischen dem Zustandsvektor x am Eingang des neuronalen Netzes und dem Vektor "0" Ausgang 84 ist durch eine Gewichtsmatrix bestimmt. Wenn die Prozessorelemente ein Abbild der zustandsabhängigen Riccatigleichung darstellen, dann ergibt die Gewichtsmatrix nach dem Training die Lösung $P(\underline{x})$ der zustandsabhängigen Riccatigleichung. Diese Lösung wird an einem Ausgang 90 abgegriffen.

Auch dieser Lernvorgang kann praktisch in Echtzeit ablaufen.

Bei der Anordnung nach Fig.5 ist statt des neuronalen Netzes ein paralleler Prozessor für Vektor-Matrix-Operationen (z.B. ein sog. "Systolic Array Processor") 92 vorgesehen. In diesen " Prozessor" wird die zustandsabhängige Riccatigleichung durch entsprechende Vektor-Matrix-Operationen implementiert. Am Ausgang 94 sollte "0" erscheinen. Das ist durch einen Vektor "0" an einen Sollausgang 96 vorgegeben. Die in einem Summierpunkt 98 gebildete Differenz beaufschlagt einen Regler 100. Der Regler 100 verändert die $P(\underline{x})$-Parameter dieser implementierten zustandsabhängigen Riccatigleichung, so daß am Ausgang 94 "0" erscheint. Die Parameter entsprechen dann der Lösung der zustandsabhängigen Riccatigleichung.

**Patentansprüche**

1. Regler, auf welchen ein Zustände einer Regelstrecke wiedergebender Zustandsvektor ($\underline{x}$) aufgeschaltet ist und der einen Stellgrößenvektor ($\underline{u}$) von optimierten Stellgrößen liefert, wobei der Zusammenhang zwischen Zustandsvektor und Stellgrößenvektor durch eine Matrix von Gewichten gegeben ist **gekennzeichnet durch** gleichungslösende Mittel (20;32) zur algorithmischen Lösung einer Optimierungsgleichung in Echtzeit und Mittel (22;34) zur Aufschaltung des Zustandsvektors ($\underline{x}$) auf diese gleichungslösenden Mittel (20;32), wobei die Lösung der Optimierungsgleichung auf den Regler (12;26) zur Bestimmung der Gewichte aufgeschaltet ist.

2. Regler nach Anspruch 1, **dadurch gekennzeichnet, daß** die Optimierungsgleichung die zustandsabhängige Riccatigleichung ist.

3. Regler nach Anspruch 1oder 2, **dadurch gekennzeichnet, daß**

   (a) ein lernfähiges Modell (70) der Regelstrecke (30) vorgesehen ist, welches von dem Zustandsvektor ($\underline{x}$) und dem Stellgrößenvektor ($\underline{u}$) beaufschlagt ist und einen Schätzwert ($\underline{\hat{x}}$) des Zustandsvektors liefert,

   (b) ein erstes vektorielles Lernsignal ($\delta\underline{x}$) für das lernfähige Modell (70) von der Differenz des tatsächlichen Zustandsvektors und des Schätzwertes des Zustandsvektors gebildet ist und

   (c) aus dem trainierten Modell (70) der Regelstrecke (30) ein zweites vektorielles Lernsignal ($\delta\underline{u}$) für ein vom Zustandsvektor ($\underline{x}$) und dem Stellgrößenvektor ($\underline{u}$) beaufschlagtes reglerseitiges Netzwerk (58) abgeleitet ist, wobei dieses reglerseitige Netzwerk (58) einen Korrekturwert ($\Delta\underline{u}$) für den sich aus der Lösung der Optimierungsgleichung an dem Regler (26) ergebenden optimalen Stellgrößenvektor ($\underline{u}_{opt}$) zur Bildung des auf die Regelstrecke (30) aufgeschalteten aktuellen Stellgrößenvektors ($\underline{u}$) liefert.

4. Regler nach Anspruch 3, **dadurch gekennzeichnet, daß**

(a) das Modell (70) der Regelstrecke (30) eine erste Matrix (F($\underline{x}$)) aufweist, welche mit dem Zustandsvektor ($\underline{x}$) multipliziert wird, und eine zweite Matrix (G($\underline{x}$)), welche mit dem Stellgrößenvektor ($\underline{u}$) multipliziert wird,

(b) die Summe der mit den jeweiligen Matrizen (F($\underline{x}$);G($\underline{x}$)) multiplizierten Zustands- und Stellgrößenvektoren ($\underline{x}$;$\underline{u}$) als Modellwert ($\dot{\bar{x}}$) der Zeitableitung des Zustandsvektors zur Bildung eines Modellwertes ($\bar{x}$) des Zustandsvektors integriert wird und

(c) ein regelstreckenseitige lernfähige Struktur (48) vorgesehen ist, die einen Korrekturwert ($\triangle\underline{x}$) für den Modellwert des Zustandsvektors liefert, wobei diese lernfähige Struktur (48) von dem ersten vektoriellen Lernsignal ($\delta\underline{x}$) trainierbar ist.

5. Regler nach Anspruch 3 oder 4, **dadurch gekennzeichnet, daß** das zweite vektorielle Lernsignal ($\delta\underline{u}$) durch Rückpropagation des ersten Lernsignals durch die regelstreckenseitige lernfahige Struktur (48) erzeugt wird.

6. Regler nach Anspruch 1, **dadurch gekennzeichnet daß**

(a) eine off-line trainierte lernfähige Struktur (74) an ihrem Eingang mit dem Zustandsvektor ($\underline{x}$) der Regelstrecke beaufschlagt ist und an ihrem Ausgang einen Stellgrößenvektor ($\underline{u}$) liefert, wobei die Stellgrößen des Stellgrößenvektors auf die Regelstrekke (76) aufgeschaltet sind,

(b) die gleichungslösenden Mittel (78) on-line von dem Zustandsvektor ($\underline{x}$) beaufschlagt sind und einen optimalen Stellgrößenvektor ($\underline{u}_{opt}(t)$) liefern und

(c) die Differenz des von dem neuronalen Netz gelieferten Stellgrößenvektors ($\underline{u}(t)$) und des von den gleichungslösenden Mitteln (78) gelieferten, optimalen Stellgrößenvektors ($\underline{u}_{opt}(t)$) als Lernsignal on-line auf die lernfähige Struktur (74) aufgeschaltet ist.

7. Regler nach einem der Ansprüche 1 bis 6, **dadurch gekennzeichnet, daß**

(a) die gleichungslösenden Mittel eine die Optimierungsgleichung nachbildende Matrixstruktur (82;92) mit veränderbaren Elementen enthalten, die einen Eingang mit einem Ausgang verknüpft, wobei an dem Eingang der Zustandsvektor ($\underline{x}$) anliegt,

(b) Mittel zur Veränderung der Elemente der Matrixstruktur in Echtzeit in Abhängigkeit von dem Ausgang vorgersehen sind, derart, daß der am Ausgang erscheinende Vektor "0" wird, und

(c) die Elemente der Matrixstruktur als Lösung der Optimierungsgleichung ausgegeben werden.

8. Regler nach Anspruch 7, **dadurch gekennzeichnet, daß** die Matrixstruktur eine lernfähige Struktur (82) ist, die mit dem von "0" abweichenden Ausgang als Lernsignal on-line trainierbar ist.

9. Regler nach Anspruch 8, **dadurch gekennzeichnet, daß** die Matrixstruktur durch einen parallelen Prozessor für Vektor-Matrix-Multiplikation (z.B. einen "Systolic Array Processor") (92) vorgegeben ist, dessen Parameter in einem Regelkreis in Abhängigkeit von dem von "0" abweichenden Ausgangssignal veränderbar sind.

10. Regler, auf welchen ein Zustände oder einen Zustand einer Regelstrecke wiedergebender Zustandsvektor ($\underline{x}$) aufgeschaltet ist und der einen Stellgrößenvektor ($\underline{u}$) von wenigstens einer optimierten Stellgröße liefert, wobei der Zusammenhang zwischen Zustandsvektor und Stellgrößenvektor durch einen Faktor oder eine Matrix von Gewichten gegeben ist **dadurch gekennzeichnet, daß**

(a) ein lernfähiges Modell (70) der Regelstrekke (30) vorgesehen ist, welches von dem Zustandsvektor ($\underline{x}$) und dem Stellgrößenvektor ($\underline{u}$) beaufschlagt ist und einen Schätzwert ($\underline{\hat{x}}$) des Zustandsvektors liefert,

(b) ein erstes vektorielles Lernsignal ($\delta\underline{x}$) für das lernfähige Modell (70) von der Differenz des tatsächlichen Zustandsvektors und des Schätzwertes des Zustandsvektors gebildet ist und

(c) aus dem trainierten Modell (70) der Regelstrecke (30) ein zweites vektorielles Lernsignal ($\delta\underline{u}$) für ein vom Zustandsvektor ($\underline{x}$) und dem Stellgrößenvektor ($\underline{u}$) beaufschlagtes reglerseitiges Netzwerk (58) abgeleitet ist, wobei dieses reglerseitige Netzwerk (58) einen Korrekturwert ($\triangle\underline{u}$) für den sich an dem Regler (26) ergebenden optimalen Stellgrößenvektor ($\underline{u}_{opt}$) zur Bildung des auf die Regelstrecke (30) aufgeschalteten aktuellen Stellgrößenvektors ($\underline{u}$) liefert.

11. Regler nach Anspruch 10, **dadurch gekennzeich-**

**net, daß**

(a) das Modell (70) der Regelstrecke (30) eine erste Matrix (F($\underline{x}$)) aufweist, welche mit dem Zustandsvektor ($\underline{x}$) multipliziert wird, und eine zweite Matrix (G($\underline{x}$)), welche mit dem Stellgrößenvektor ($\underline{u}$) multipliziert wird,

(b) die Summe der mit den jeweiligen Matrizen (F($\underline{x}$);G($\underline{x}$)) multiplizierten Zustands- und Stellgrößenvektoren ($\underline{x}$;$\underline{u}$) als Modellwert ($\dot{\bar{x}}$) der Zeitableitung des Zustandsvektors zur Bildung eines Modellwertes ($\bar{x}$) des Zustandsvektors integriert wird und

(c) eine regelstreckenseitige lernfähige Struktur (48) vorgesehen ist, die einen Korrekturwert ($\triangle\underline{x}$) für den Modellwert des Zustandsvektors liefert, wobei diese lernfähige Struktur (48) von dem ersten vektoriellen Lernsignal ($\delta\underline{x}$) trainierbar ist.

12. Regler nach Anspruch 10 oder 11, **dadurch gekennzeichnet, daß** das zweite vektorielle Lernsignal ($\delta\underline{u}$) durch Rückpropagation des ersten Lernsignals durch die regelstreckenseitige lernfähige Struktur (48) erzeugt wird.

$\underline{x}_0$    Target

$\underline{u}_{opt}(t)$

18

REGELSTRECKE
$\dot{\underline{x}} = \underline{g}(\underline{x}, \underline{u}, t)$

10

$\underline{x}(t)$

16

LENKREGLER
$\underline{u}_{opt} = -R^{-1}G^TP\underline{x}$

14

12    24

$P(\underline{x})$

LÖSUNG DER
SDRE

22

20

FIG.1

92

$\underline{x}$

SYSTOLIC ARRAY -
PROZESSOR ZUR
LÖSUNG DER SDRE

Ausgang    Sollausgang = 0

98

94    96

REGLER

100

FIG.5

FIG.2

LERNFÄHIGER SDRE - REGLER

LÖSUNG DER SDRE

$P(\underline{x})$

LENKREGLER

$\underline{u}_{opt} = -R^{-1}G^T P\underline{x}$

RN

$\Delta u$

REGELSTRECKE

$\underline{x} = \underline{g}(\underline{x}, \underline{u}, t)$

$\underline{x}_0$   Target

$\underline{u}_{opt}$

$\underline{u}$

$\underline{x}$

$F(\underline{x})$

$G(\underline{x})$

$\overline{\dot{x}}$

$\int dt$

$\overline{x}_0$

$\overline{x}$

$\hat{x}$

$\underline{\dot{x}}$   - 36 -   $\underline{\Delta x}$   $\delta x$

SN

$\delta u$

LERNFÄHIGES MODELL DER STRECKE

EP 1 148 395 A2

FIG.3

FIG.4